# EUROPÄISCHE PATENTSCHRIFT

(11) **EP 0 292 612 B1**
(45) Veröffentlichungstag und Bekanntmachung des Hinweises auf die Patenterteilung: **12.05.1993**
(21) Anmeldenummer: 87117038.7
(22) Anmeldetag: 19.11.1987
(51) Int. Cl.: G01N 30/16, G01N 30/32, G01N 30/46, B01D 15/08

(54) **Gaschromatograph, Verzweigungsstück hierfür und Verfahren zur gaschromatographischen Trennung**
Gas chromatograph, ramification piece and method for chromatographic separation
Chromatographe à gaz, pièce de bifurcation et méthode de séparation chromatographique

(30) Priorität: 23.05.1987 DE 3717456
(43) Veröffentlichungstag der Anmeldung: 30.11.1988
(73) Patentinhaber: Gerstel, Eberhard, D-45478 Mülheim (DE)
(72) Erfinder: Gerstel, Eberhard, D-45478 Mülheim (DE)
(74) Vertreter: Sparing Röhl Henseler Patentanwälte

(56) Entgegenhaltungen:
- EP-A- 0 003 617
- DE-A- 1 598 371
- DE-A- 1 909 703
- DE-B- 2 655 387
- US-A- 3 426 599
- JOURNAL OF CHROMATOGRAPHY, Band 91, Nr. 1, 24. April 1974, pages 603-612, Elsevier Scientific Publishing Co., Amsterdam, NL; J.A. RIJKS et al.: "Characterization of hydrocarbons in complex mixtures by two-dimensional precision gas chromatography"
- JOURNAL OF CHROMATOGRAPHY, Band 112, 1975, Seiten 205-217, Elsevier Scientific Publishing Co., Amsterdam, NL; G. SCHOMBURG et al.: "Aspects of double-column gas chromatography with glass capillaries involving intermediate trapping"
- JOURNAL OF HIGH RESOLUTION CHROMATOGRAPHY & CHROMATOGRAPHY COMMUNICATIONS, Band 6, Nr. 9, September 1983, Seiten 504-507, Dr. Alfred Huethig Publishers, Heidelberg, DE; P. SANDRA et al.: "Construction of a polyimide effluent splitter for multiple detection in capillary gas chromatography"
- Siemens Firmenprospekt"Mehrdimensionale Chromatographie: Sichromat 2-der GC mit Doppelofen"

## Beschreibung

Die Erfindung betrifft einen Gaschromatographen mit einer Trägergaszuführung zur druckgeregelten Zufuhr eines Trägergasstromes, die zu einer Probenaufgabeeinrichtung mit Vortrennung führt, die mit einem Verzweigungsstück und dieses mit einer Trennsäule verbunden ist, wobei das Verzweigungsstück zusätzlich einen zu einer Hilfsgaszuführleitung für einen geregelten Hilfsgasstrom führenden Hilfsgaseingang, einen zu einer schaltbaren Ventileinrichtung führenden ersten Ausgang, einen zu einem Kontrolldetektor führenden zweiten Ausgang und eine Drossel aufweist, während sich an die Trennsäule gegebenenfalls ein Detektor anschließt, ferner ein Verzweigungsstück für einen Gaschromatographen mit einer Durchgangsbohrung, die einen Eingang für einen Trägergasstrom aus einer Probenaufgabeeinrichtung und einen mit einer Trennsäule zu verbindenden Ausgang besitzt, einem Hilfsgaseingang für einen geregelten Hilfsgasstrom, einem mit einer schaltbaren Ventileinrichtung zu verbindenden ersten Ausgang und einem mit einem Kontrolldetektor zu verbindenden zweiten Ausgang sowie mit einer Drossel, sowie zusätzlich ein Verfahren zur gaschromatographischen Trennung, wobei zwischen zwei Betriebszuständen hin- und hergeschaltet wird, wobei in einem ersten Betriebszustand ein geregelter Trägergasstrom durch eine Probenaufgabeeinrichtung und von dort zu einem Kontrolldetektor durch Blockierung des Zutritts zur Kapillartrennsäule durch einen geregelten Hilfsgasstrom geführt wird, während in dem zweiten Betriebszustand der Trägergasstrom zur Trennsäule weitergeleitet wird.

Aus dem Firmenprospekt der Fa. Siemens Aktiengesellschaft "Mehrdimensionale Chromatographie: SICHROMAT 2 der GC mit Doppelofen", Bestell-Nr. A19100-E687-A2-V1 ist ein Chromatograph der eingangs genannten Art bekannt, der ein aufwendiges, eine lange Kapillare enthaltendes Verzweigungsstück verwendet, das zu drei verschiedenen Schaltzuständen führt und zwei verschieden geregelte, einen Differenzdruck aufweisende Hilfsgasströmungen benötigt. Außerdem wird ein Kontrolldetektor verwendet, der jedoch nur in einem der drei Schaltzustände beaufschlagt wird und daher nicht das gesamte Chromatogramm empfängt. Dieser Chromatograph läßt sich daher nur nach Zeitsteuerung und nicht nach Peakerkennung schalten, wobei beim Umschalten andere Strömungsverhältnisse in der Vor- und Hauptsäule auftreten, die zu einer Änderung der Retentionszeiten führen, wodurch eine Einstellung der Zeitsteuerung schwierig und zeitaufwendig wird. Nur mit zusätzlichem Aufwand läßt sich eine Zwischenausblendung erreichen.

Außerdem ist aus "Journal of Chromatography", Band 91, Nr. 1, 14. April 1974, Seiten 603-612 eine Verzweigungsanordnung für einen Chromatographen bekannt, die aus drei untereinander durch Kapillaren verbundenen Verzweigungsstücken besteht, von denen zwei mit Ventilen gekoppelt sind, die durch einen Zeitverzögerungsschalter geöffnet bzw. geschlossen werden können, wobei eines dieser Ventile zum Zuschalten eines Hilfsgasstroms dient. Wenn das letztgenannte Ventil geschlossen ist, kann eine Kontaminierung der von diesem Ventil zum zugehörigen Verzweigungsstück führenden Leitung durch die zu verarbeitende Probe stattfinden. Abgesehen davon sind das Totvolumen und die Masse der Verzweigungsanordnung relativ groß. Zusätzlich sind komplizierte Überlegungen bezüglich der Verzögerungszeit notwendig.

Aufgabe der Erfindung ist es, einen Gaschromatographen der eingangs genannten Art zu schaffen, bei dem in der Probenaufgabeeinrichtung und in der Trennsäule praktisch immer gleiche Strömungen und ohne Verschleppung bei Strömungsumkehrung erzielbar sind und der eine Zeitsteuerung als auch eine Steuerung entsprechend Peakerkennung ermöglicht.

Diese Aufgabe wird dadurch gelöst, daß im Verzweigungsstück probenaufgabeseitig zur Drosselstelle der erste und zweite Ausgang angeordnet sind und trennsäulenseitig zur Drosselstelle die Hilfsgaszuführleitung für den Hilfsgasstrom mündet.

Bei dem eingangs genannten Verzweigungsstück sind zu diesem Zweck die beiden Ausgänge probenaufgabeseitig zur Drosselstelle angeordnet und trennsäulenseitig zur Drosselstelle des Hilfsgaseingangs vorgesehen.

Bei dem eingangs genannten Verfahren wird zu diesem Zweck ein Gaschromatograph mit einem Verzweigungsstück, das wie vorstehend ausgebildet ist, verwendet, wobei der Hilfsgasstrom dem Hilfsgaseingang des Verzweigungsstücks zugeführt wird, so daß im ersten Betriebszustand nur ein geringer Teil des Trägergasstroms über dem zweiten Ausgang des Verzweigungsstücks dem Kontrolldetektor und der überwiegende Teil über dem ersten Ausgang des Verzweigungsstücks einer durch ein Magnetventil geöffneten Abführleitung zugeführt wird, während in dem zweiten Betriebszustand das Magnetventil die Abführleitung geschlossen hält und der Kontrolldetektor weiterhin mit einem Teil des Trägergasstroms versorgt wird, wobei die Strömungen im ersten und zweiten Betriebszustand an der Probenaufgabeeinrichtung und an der Trennsäule strömungsmäßig konstant gehalten werden, indem die am zweiten Ausgang des Verzweigungsstücks eingestellte Strömung gleich der Differenz der Hilfsgasströmungen zwischen den beiden Zuständen ist.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt schematisch ein Ausführungsbeispiel für den Aufbau eines Gaschromatographen.

Fig. 2a und 2b zeigen im Schnitt ein Verzweigungsstück für den Gaschromatographen von Fig. 1 mit den Strömungsverhältnissen in dessen beiden Betriebszustanden.

Fig. 3 zeigt schematisch ein weiteres Ausführungsbeispiel für den Aufbau eines Gaschromatographen.

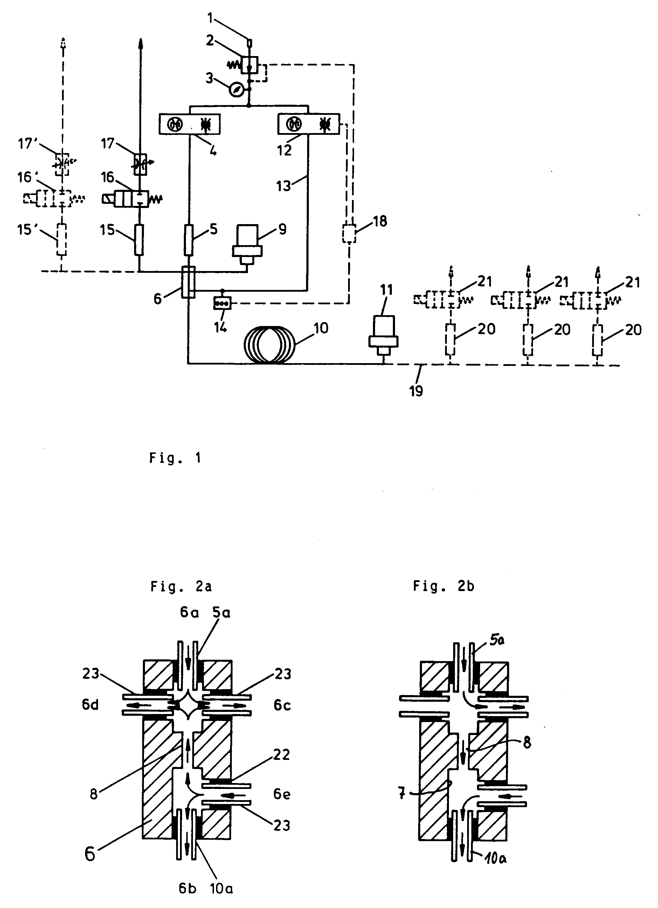

Der in Fig. 1 dargestellte Gaschromatograph umfaßt einen Tragergaseingang 1. Hierdurch zugeführtes Trägergas passiert einen Druckregler 2, stromabwärts von dem der Trägergasdruck mittels eines Manometers 3 gemessen und angezeigt wird. Ein Teil des druckgeregelten Trägergasstromes - ein erster Strömungsast - wird über einen Strömungsregler 4, der mit einer Anzeige versehen ist, einer Probenaufgabeeinrichtung 5 mit Vortrennung für eine zu verarbeitende Probe, etwa eine Kaltaufgabeeinrichtung, wie sie beispielsweise in der DE-OS 34 00 458 beschrieben ist, zugeführt. Der Ausgang hiervon ist mit einem Eingang 6a eines Verzweigungsstücks 6 verbunden. Das Verzweigungsstück 6 besitzt eine sich vom Eingang 6a zu einem Ausgang 6b hindurcherstreckende Bohrung 7, die in ihrem mittleren Bereich eine Drossel 8 aufweist. Benachbart zum Eingang 6a, d.h. probenaufgabeseitig zur Drossel 8, zweigen von der Bohrung 7 des Verzweigungsstücks 6 zwei Ausgänge 6c und 6d ab. Der Ausgang 6c führt zu eins Kontrolldetektor 9. Der Ausgang 6d des Verzweigungsstücks 6 ist mit einer Falle 15 verbunden, der ein Magnetventil 16 und dann ein Nadelventil 17 nachgeschaltet ist (gegebenenfalls können weitere Fallen 15' mit zugehörigen Magnet- und Nadelventilen 16', 17' parallel hierzu geschaltet sein). Der Ausgang 6b ist mit einer beheizbaren chromatographischen Trennsäule 10, hier einer Kapillartrennsäule (jedoch ist auch eine gepackte Trennsäule verwendbar) verbunden, an die ein Hauptdetektor 11 angeschlossen ist.

Der weitere Teil des druckgeregelten Trägergasstromes - ein zweiter Strömungsast - wird über einen Strömungsregler 12, der mit einer Anzeige versehen ist, als Hilfsgasströmung einem weiteren Eingang 6e des Verzweigungsstücks 6, der sich trennsäulenseitig zur Drossel 8 befindet, über eine Leitung 13 zugeführt. An die Leitung 13 zwischen Strömungsregler 12 und Eingang 6e ist ein Digitalmanometer 14 angeschlossen.

Der Tragergasstrom wird somit in zwei Strömungsäste aufgeteilt, so daß der erste Strömungsast über die Probenaufgabeeinrichtung 5 in das Verzweigungsstück 6 und damit zu dessen Ausgängen 6c und 6d gelangt, während der zweite Strömungsast als Hilfsgasstrom über die Leitung 13 zum Eingang 6e des Verzweigungsstücks 6 gelangt.

Der beschriebene Gaschromatograph besitzt zwei Betriebszustände, die sich zunächst darin unterscheiden, ob das Magnetventil 16 geöffnet oder geschlossen ist.

Im ersten Betriebszustand, bei dem das Magnetventil 16 geöffnet ist, herrschen folgende Verhältnisse:
Die Hilfsgasströmung des zweiten Strömungsastes durch die Leitung 13 muß größer sein als die Trägergasströmung des ersten Strömungsastes zum Eingang 6a des Verzweigungsstücks 6, damit - wie in Fig. 2a dargestellt - die Hilfsgasströmung über die Drossel 8 den ersten Strömungsast daran hindert, zur Kapiallartrennsäule 10 zu gelangen. Vielmehr gelangt ein kleiner Teil der Hilfsgasströmung des zweiten Strömungsastes durch die Drossel 8 mit der Trägergasströmung des ersten Strömungsastes zu den Ausgängen 6c und 6d, während der größte Teil der Hilfsgasströmung zur Kapillartrennsäule 10 gelangt, um diese gasmäßig zu versorgen. Für die entsprechende Einstellung muß der Strömungsregler 12 auf eine größere Strömung als der Strömungsregler 4 eingestellt werden.

Bei diesem ersten Betriebszustand wird, da das Magnetventil 16 geöffnet ist, erreicht, daß
1. der Kontrolldetektor 9 mit dem vollen Chromatogramm beaufschlagt wird,
2. die Strömung aus Ausgang 6d, die zur Ausblendung (u.a. Peak-cutting einschließlich Heartcut) oder Freispülung verwendet wird, am Nadelventil 17 eingestellt wird, und zwar zweckmäßigerweise derart, daß sich der gleiche Druck am Digitalmanometer 14 einstellt wie im zweiten (nachstehend diskutierten) Betriebszustand, und
3. die Kapillartrennsäule 10 mit der notwendigen Gasströmung versorgt wird.

Damit der zweite Betriebszustand erreicht wird und die zu verarbeitende Probe auf die Kapillartrennsäule 10 gelangen kann, wird das Magnetventil 16 geschlossen. Wie in Fig. 2b dargestellt ist, wird dann nichts mehr über den Ausgang 6d abgeführt, vielmehr gelangt auch das die Probe enthaltende Trägergas des ersten Strömungsastes - abgesehen von der Nebenströmung zum Kontrolldetektor 9 - über die Drossel 8 in die Kapillartrennsäule 10, um dann mittels des Hauptdetektors 11 analysiert zu werden. Hierzu muß die Hilfsgasströmung des zweiten Strömungsastes kleiner sein als die Trägergasströmung des ersten Strömungsastes. Die entsprechende Einstellung erfolgt wiederum über den Strömungsregler 12. Die in dem in Fig. 2a dargestellten Zustand durch das Nadelventil 17 eingestellte Strömung am Ausgang 6d ist hierbei gleich der einzustellenden Differenz der Hilfsgasströmungen zwischen den Zuständen gemäß den Fig. 2a und 2b.

Hierdurch wird im zweiten Betriebszustand erreicht, daß
1. die Strömungen in der Probenaufgabeeinrichtung 5 und auf der Kapillartrennsäule 10 konstant bleiben, wenn das Magnetventil 16 umgeschaltet wird,
2. die Hilfsgasströmung eine Kontaminierung der Leitung 13 mit der zu verarbeitenden Probe verhindert und
3. der Kontrolldetektor 9 weiterhin mit dem vollen Chromatogramm beaufschlagt wird.

Erfindungsgemäß ist es für das Arbeiten des Gaschromatographen wesentlich, daß in beiden Betriebszuständen die Strömungen in der Probenaufgabeeinrichtung 5 und in der Kapillartrennsäule 10 trotz Umschaltung zwischen den beiden Betriebszuständen zu irgendwelchen Zeitpunkten konstant bleiben, indem die durch das Nadelventil 17 eingestellte Strömung am Ausgang 6d des Verzweigungsstücks 6 gleich der Differenz der Hilfsgasströmungen zwischen den beiden Zuständen ist und die Strömungsumkehrung beim Umschalten von einem Betriebszustand in den anderen auf das sehr kurze Stück der Drossel 8 im Verzweigungsstück 6 beschränkt ist. Letztere wird durch Ablesen des Digitalmanometers 14 und durch manuelle Einstellung (oder gegebenenfalls automatische Einstellung über einen Sollwertgeber 18) des Strömungsreglers 12 und gegebenenfalls des Druckreglers 2 eingestellt. Dies zusammen mit der ständigen Beaufschlagung des Kontrolldetektors 9 ermöglicht es, sowohl nach Zeitsteuerung als auch nach Peakerkennung zu arbeiten, um das Lösungsmittel auszublenden, eine Zwischen- oder Endausblendung (Ausblendung eines bestimmten Chromatogrammanteils bis herab zu einem einzelnen Peak) vorzunehmen oder ohne Kontaminierung freizuspülen.

Da der Kontrolldetektor 9 kontinuierlich durch den Trägergasstrom beaufschlagt wird, lassen sich an diesem entsprechende Peaks gemäß der durch die Probenaufgabeeinrichtung 5 bewirkten Vortrennung erkennen und damit durch Wahl des ersten Betriebszustandes ausblenden, während die interessierenden Teile des Chromatogramms durch Umschalten auf den zweiten Betriebszustand auf die Kapillartrennsäule 10 gegeben werden.

Aufgrund der Aufrechterhaltung gleicher Strömungen in beiden Betriebszuständen ergeben sich durch das Umschalten keine Änderungen in den Retentionszeiten, so daß eine entsprechende Umschaltung von einem Betriebszustand in den anderen anhand eines festen Zeitprogramm vorgenommen werden kann, um die gewünschten Vorgänge des Ausblendens und Freispülens nach jeweils einer Probenaufgabe vorzunehmen. (Es ist auch ein Rückspülen bei umgekehrter Strömungsrichtung bei aufgeheizter Probenaufgabeeinrichtung 5 bzw. einer entsprechenden Vorsäule möglich, wobei dann eine ein Magnet- und ein Nadelventil entsprechend den Ventilen 16, 17 aufweisende Abzweigleitung an die Leitung zwischen dem Stellorgan 4 und der Probenaufgabeeinrichtung 5 anzuschliessen ist.)

Beide Arbeitsweisen eignen sich sowohl für den analytischen als auch für den präparativen Betrieb. Bei letzterem ist ein präparativer Abgang 19, bestehend aus einer oder mehreren Sammlern 20, die gegebenenfalls zeitlich über Ventile 21 zuschaltbar sind, am Austrittsende der Kapillartrennsäule 10, zu verwenden.

Der Chromatrograph ermöglicht eine schnelle Folge von Probeninjektionen und damit ein schnelles Arbeiten, wobei zudem zeitaufwendige und mühsame Einstellungen entfallen.

Der ausgeblendete Teil des Chromatogramms geht nicht verloren, sondern wird in der Falle 15 (und gegebenenfalls in weiteren Fallen 15') aufgefangen. Daher ist es auch im ersten Betriebszustand nur unter Verwendung der durch die Probenaufgabeeinrichtung 5 bewirkten Vortrennung möglich, nicht interessierende Substanzen wie Lösungsmittel o.dgl. in der Falle 15 (die hierbei als Nullfalle dient) aufzufangen und interessierende Substanzen in einer oder mehreren Fallen 15' aufzufangen oder sogar anzureichern, ohne hierzu die Kapillartrennsäule 10 zu benutzen und um diese interessierenden Substanzen anschließend mittels der Kapillartrennsäule 10 weiter zu untersuchen bzw. weitere Ausblendungen vorzunehmen. Hierzu werden die aufgefangenen oder angereicherten Substanzen in die Probenaufgabeeinrichtung 5 eingebracht. Da die Fallen 15, 15' gewöhnlich Röhrchen aufweisen, die die zugeführten Substanzen aufnehmen, ist es zweckmäßig, in der Probenaufgabeeinrichtung 5 ein identisches Röhrchen zu verwenden, so daß letzteres durch dasjenige der Falle 15' ausgetauscht werden kann. So besitzt die Kaltaufgabeeinrichtung gemäß der DE-OS 34 00 458 ein (beheizbares) Verdampferrohr, das in einem solchen Fall durch ein identisches Rohr einer Falle 15' mit entsprechendem Inhalt ersetzt werden kann.

Obwohl eine Kaltaufgabeeinrichtung nach der DE-OS 34 00 458 als Probenaufgabeeinrichtung 5 bevorzugt wird, ist es auch möglich, eine solche mit einer beheizbaren Vorsäule zu verwenden.

Als Detektoren 9, 11 kommen z.B. Flammenionisationsdetektoren, Massenspektrometer o.dgl. infrage.

Anstelle der Strömungsregler 4, 12 lassen sich auch Massendurchflußregler verwenden. Außerdem ist es möglich, anstelle der Regler 4, 12 einfache Nadelventile einzusetzen, während der Ausgang des Manometers 14 den Druckregler 2 regelt, so daß nur über den Druck geregelt wird.

Gemäß Fig. 2a, 2b mündet das Endstück 5a der Probenaufgabeeinrichtung in der Bohrung 7 koaxial zu dieser und ist mittels einer Graphitdichtung 22 abgedichtet. Ebenso münden die Anschlußstücke 23 für den Kontrolldetektor 9 und die Falle 15 in der Bohrung 7 senkrecht zu deren Längsachse auf einer Seite der Drossel 8 und die Leitung 13 auf der anderen Seite der Drossel 8. Koaxial zur Bohrung 7 ist das Eintrittsstück 10a der Kapillartrennsäule 10 von der Bohrung 7 aufgenommen. Auch diese Teile sind durch Graphitdichtungen 22 abgedichtet. Die Dimensionierung der Drossel 8 ist abhängig von den herrschenden Druck- und Strömungsverhältnissen. Die Drossel 8 kann beispielsweise bei Verwendung einer Kapillartrennsäule 10 durch eine Bohrung eines Durchmessers in der Größenordnung von 0,2 mm und einer Länge in der Größenordnung von 0,7 mm gebildet werden. Gegebenenfalls kann die Drossel 8 in einem Einsatzstück aus inertem Material, wie einem Si-Kristall mit durch Sauerstoff inaktivierter Oberfläche oder Glas, ausgebildet sein, das in das Verzweigungsstück 6 eingesetzt ist. Das Verzweigungsstück 6 kann ferner gegebenenfalls beheizbar sein, um zu vermeiden, daß darin Substanzen auskondensieren. Hierzu kann auch eine thermisch leitende, etwa metallische Verbindung vom Verzweigungsstück 6 zur Probenaufgabeeinrichtung 5 vorgesehen sein. Sämtliche Anschlußstücke 5a, 10a, 23 können aus Glas sein, so daß insbesondere die Übergänge von der Probenaufgabeeinrichtung 5 zum Verzweigungsstück 6 und von dort zur Trennsäule 10 bzw. zur Falle 12 immer aus Glas sind.

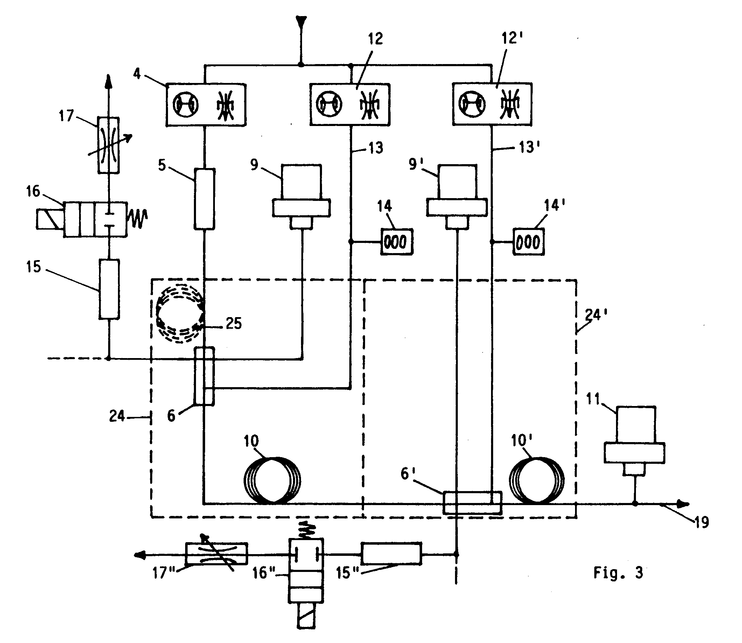

Die in Fig. 3 dargestellte Ausführungsform unterscheidet sich von derjenigen nach Fig. 1 dadurch, daß anstelle eines Ofens, in dem das Verzweigungsstück 6 und die Trennsäule 10 angeordnet sind (in Fig. 1 nicht dargestellt), zwei hintereinandergeschaltete Öfen 24 und 24' vorgesehen sind, wobei der Ausgang der Trennsäule 10 des ersten Ofens 24 über ein weiteres im zweiten Ofen 24' befindliches Verzweigungsstück 6' mit einer weiteren in dem zweiten Ofen 24' befindlichen Trennsäule 10' verbunden ist. An das Verzweigungsstück 6' ist ein weiterer Kontrolldetektor 9', eine mit einem weiteren Strömungsregler 12' versehene Hilfsgasleitung 13' und eine oder mehrere Fallen 15'' mit zugehörigen Magnet- und Nadelventilen 16'' und 17'' angeschlossen, und zwar wie die entsprechenden Teile an das Verzweigungsstück 6. Der Ausgang der Trennsäule 10' ist an den Hauptdetektor 11 und gegebenenfalls mit einem präparativen Abgang 19 verbunden. Jedoch können auch weitere Öfen entsprechend dem Ofen 24' mit entsprechenden Kontrolldetektoren, Hilfsgaszuführungen und Fallen, die an weitere Verzweigungsstücke angeschlossen sind, und mit weiteren Trennsäulen vorgesehen sein.

Die Ausführungsform der Fig. 3 dient dazu, ein gegebenenfalls vielfaches Schneiden des Chromatogramms splitlos vorzunehmen. Ein Rückspülen findet hierbei nicht statt, da weggeschnittene Teile über das Verzweigungsstück 6' der oder den Fallen 15'' zugeführt werden. Diese Arbeitsweise wird wiederum durch die Strömungskontrolle gewährleistet.

Außerdem kann eine Hilfstrennsäule 25 im Anschluß an die Probenaufgabeeinrichtung 5 innerhalb des ersten Ofens 24 oder außerhalb hiervon in einem Hilfsofen, der eine steuerbare und gegebenenfalls programmierbare Aufheizung ermöglicht, vorgesehen sein, um eine entsprechende Vortrennung zu bewirken.

Die Transferleitungen zu den Fallen 15, 15', 15'' und zu den präparativen Fallen 20 sind beheizbar.

Die Probenaufgabeeinrichtung 5 kann gegebenenfalls mit flüssigem Stickstoff kühlbar sein.

Die vom Ausgang 6c eines Verzweigungsstücks 6 oder 6' zu einem Kontrolldetektor 9 oder 9' führende Leitung besitzt beispielsweise durch Wahl eines entsprechenden Kapillardurchmessers, Einbau einer Drossel oder durch Einwirkung eines pneumatischen Gegendrucks eine Drosselwirkung, und zwar in Abhängigkeit vom Widerstand der an das Verzweigungsstück 6 oder 6' angeschlossenen Trennsäule 10 oder 10', so daß vorzugsweise 1/500 bis 1/1000 des dem Verzweigungsstück 6 oder 6' zugeführten Stromes für den Kontrolldetektor 9 oder 9' abgezweigt und damit das Chromatogramm möglichst wenig beeinträchtigt wird. Je nach verwendeter Kapillare für die Trennsäule 10 oder 10' ist daher die Leitung zwischen dem Ausgang 6c und dem Kontrolldetektor 10 oder 10' abzustimmen.

## Patentansprüche

1. Gaschromatograph mit einer Trägergaszuführung (1, 2) zur druckgeregelten Zufuhr eines Trägergasstromes, die zu einer Probenaufgabeeinrichtung (5) mit Vortrennung führt, die mit einem Verzweigungsstück (6) und dieses mit einer Trennsäule (10) verbunden ist, wobei das Verzweigungsstück (6) zusätzlich einen zu einer Hilfsgaszuführleitung (13) für einen geregelten Hilfsgasstrom führenden Hilfsgaseingang (6e), einen zu einer schaltbaren Ventileinrichtung (16, 17) führenden ersten Ausgang (6d), einen zu einem Kontrolldetektor (9) führenden zweiten Ausgang (6c) und eine Drossel (8) aufweist, während sich an die Trennsäule (10) gegebenenfalls ein Detektor (11) anschließt, dadurch **gekennzeichnet,** daß im Verzweigungsstück (6) probenaufgabeseitig zur Drosselstelle der erste (6d) und zweite Ausgang (6c) angeordnet sind und trennsäulenseitig zur Drosselstelle die Hilfsgaszuführleitung (13) für den Hilfsgasstrom mündet.

2. Gaschromatograph nach Anspruch 1, dadurch gekennzeichnet, daß in der Hilfsgaszuführleitung (13) ein erstes Stellorgan (12) zur Einstellung des Hilfsgasstroms vorgesehen ist.

3. Gaschromatograph nach Anspruch 1 oder 2, dadurch gekennzeichnet, daß der Probenaufgabeeinrichtung (5) ein zweites Stellorgan (4) für den Trägergasstrom vorgeschaltet ist.

4. Gaschromatograph nach Anspruch 2 oder 3, dadurch gekennzeichnet, daß das erste bzw. zweite Stellorgan (12 bzw. 4) ein Strömungsregler ist.

5. Gaschromatograph nach Anspruch 2 oder 3, dadurch gekennzeichnet, daß das erste bzw. zweite Stellorgan (12 bzw. 4) ein Massendurchflußregler ist.

6. Gaschromatograph nach einem der Ansprüche 1 bis 5, dadurch gekennzeichnet, daß die Hilfsgaszuführleitung (13) vor dem Verzweigungsstück (6) mit einem Druckmesser (14) verbunden ist.

7. Gaschromatograph nach Anspruch 6, dadurch gekennzeichnet, daß der Ausgang des Druckmessers (14) zur Steuerung des ersten Stellorgans (12) und/oder eines Druckreglers (2) der Trägergaszuführung (1, 2) verwendbar ist.

8. Gaschromatograph nach Anspruch 6, dadurch gekennzeichnet, daß der Probenaufgabeeinrichtung (5) und der Hilfsgaszuführleitung (13) jeweils ein Nadelventil als Stellorgan (4, 12) vorgeschaltet ist, wobei der Ausgang des Druckmessers (14) einen Druckregler (2) der Trägergaszuführung (1, 2) steuert.

9. Gaschromatograph nach einem der Ansprüche 1 bis 8, dadurch gekennzeichnet, daß die Ventileinrichtung (16, 17) ein einstellbares Nadelventil (17) umfaßt.

10. Gaschromatograph nach einem der Ansprüche 1 bis 9, dadurch gekennzeichnet, daß der Ventileinrichtung (16, 17) eine Falle (15) vorgeschaltet ist.

11. Gaschromatograph nach einem der Ansprüche 1 bis 10, dadurch gekennzeichnet, daß mehrere durch Ventile unabhängig voneinander zu öffnende bzw. zu schließende Einheiten bestehend jeweils aus einer Falle (15 bzw. 15') und einer Ventileinrichtung (16, 17 bzw. 16', 17') parallel zueinander an den ersten Ausgang (6d) des Verzweigungsstücks (6) angeschlossen sind.

12. Gaschromatograph nach Anspruch 10 oder 11, dadurch gekennzeichnet, daß die Falle (15, 15') ein Auffangrohr aufweist, das mit einem Verdampferrohr der Probenaufgabeeinrichtung (5) identisch und austauschbar ist.

13. Gaschromatograph nach einem der Ansprüche 1 bis 12, dadurch gekennzeichnet, daß das Verzweigungsstück (6) zur Vermeidung von Kondensationen von Substanzen darin beheizbar ist.

14. Gaschromatograph nach einem der Ansprüche 1 bis 12, dadurch gekennzeichnet, daß das Verzweigungsstück (6) in thermisch-leitender Verbindung mit der Probenaufgabeeinrichtung (5) steht.

15. Gaschromatograph nach einem der Ansprüche 1 bis 14, dadurch gekennzeichnet, daß mindestens eine weitere Trennsäule (10') vorgesehen ist, die über ein weiteres Verzweigungsstück (6') an eine vorhergehende Trennsäule (10 oder 10') angeschlossen ist, wobei das weitere Verzweigungsstück (6') wie das genannte Verzweigungsstück (6) ausgebildet und angeschlossen ist, wobei dessen erster Ausgang (6d) als Hilfsgaseingang (6e) an eine oder mehrere weitere Ventileinrichtungen (16'', 17'') gegebenenfalls mit weiteren vorgeschalteten Fallen (15'') angeschlossen und dessen Hilfsgaseingang (6e) mit einer weiteren Hilfsgaszuführleitung (13') für einen geregelten Hilfsgasstrom verbunden ist, während ein weiterer Kontrolldetektor (9') mit dessen zweitem Ausgang (6c) verbunden ist.

16. Gaschromatograph nach einem der Ansprüche 1 bis 15, dadurch gekennzeichnet, daß dem Verzweigungsstück (6) eine gegebenenfalls steuerbare beheizte Hilfstrennsäule (25) vorgeschaltet ist.

17. Verzweigungsstück für einen Gaschromatographen mit einer Durchgangsbohrung (7), die einen Eingang (6a) für einen Trägergasstrom aus einer Probenaufgabeeinrichtung (5) und einen mit einer Trennsäule (10) zu verbindenden Ausgang (6b) besitzt, einem Hilfsgaseingang (6e) für einen geregelten Hilfsgasstrom, einem mit einer schaltbaren Ventileinrichtung (16, 17) zu verbindenden ersten Ausgang (6d) und einem mit einem Kontrolldetektor (9) zu verbindenden zweiten Ausgang (6c) sowie mit einer Drossel (8), dadurch **gekennzeichnet,** daß die beiden Ausgänge (6c, 6d) probenaufgabeseitig zur Drosselstelle angeordnet sind und trennsäulenseitig zur Drosselstelle des Hilfsgaseingangs (6e) vorgesehen sind.

18. Verzweigungsstück nach Anspruch 17, dadurch gekennzeichnet, daß die Drossel (8) von einer Verengung der Durchgangsbohrung (7) des Verzweigungsstücks (6) geringen Durchmessers gebildet wird und eine Länge hat, die ein Vielfaches des Durchmessers ist.

19. Verzweigungsstück nach Anspruch 18, dadurch gekennzeichnet, daß der Durchmesser der Drossel (8) in der Größenordnung von 0,2 mm liegt und die Länge ein geringes Vielfaches hiervon beträgt.

20. Verzweigungsstück nach einem der Ansprüche 17 bis 19, dadurch gekennzeichnet, daß die Durchgangsbohrung (7) ein Einsatzstück, das die Drossel (8) aufweist, enthält.

21. Verzweigungsstück nach Anspruch 20, dadurch gekennzeichnet, daß das Einsatzstück aus inertem Material, insbesondere aus einem mit Sauerstoff oberflächig inaktiviertem Si-Kristall oder aus Glas, besteht.

22. Verzweigungsstück nach einem der Ansprüche 17 bis 21, dadurch gekennzeichnet, daß es zur Vermeidung von Kondensationen von Substanzen darin beheizbar ist.

23. Verfahren zur gaschromatographischen Trennung, wobei zwischen zwei Betriebszuständen hin- und hergeschaltet wird, wobei in einem ersten Betriebszustand ein geregelter Trägergasstrom durch eine Probenaufgabeeinrichtung (5) und von dort zu einem Kontrolldetektor (9) durch Blockierung des Zutritts zur Kapillartrennsäule (10) durch einen geregelten Hilfsgasstrom geführt wird, während in dem zweiten Betriebszustand der Trägergasstrom zur Trennsäule (10) weitergeleitet wird, dadurch **gekennzeichnet,** daß ein Gaschromatograph mit einem Verzweigungsstück (6) nach einem der Ansprüche 1 bis 16 verwendet wird, wobei der Hilfsgasstrom dem Hilfsgaseingang (6e) des Verzweigungsstücks (6) zugeführt wird, so daß im ersten Betriebszustand nur ein geringer Teil des Trägergasstroms über den zweiten Ausgang (6c) des Verzweigungsstücks (6) dem Kontrolldetektor (9) und der überwiegende Teil über den ersten Ausgang (6d) des Verzweigungsstücks (6) einer durch ein Magnetventil (16) geöffneten Abführleitung zugeführt wird, während in dem zweiten Betriebszustand das Magnetventil (16) die Abführleitung geschlossen hält und der Kontrolldetektor (9) weiterhin mit einem Teil des Trägergasstroms versorgt wird, wobei die Strömungen im ersten und zweiten Betriebszustand an der Probenaufgabeeinrichtung (5) und an der Trennsäule (10) strömungsmäßig konstant gehalten werden, indem die am zweiten Ausgang des Verzweigungsstücks (6) eingestellte Strömung gleich der Differenz der Hilfsgasströmungen zwischen den beiden Zuständen ist.

24. Verfahren nach Anspruch 23, dadurch gekennzeichnet, daß im ersten Betriebszustand Teile des Chromatogramms über die Abführleitung ausgeblendet werden.

25. Verfahren nach Anspruch 24, dadurch gekennzeichnet, daß das Ausblenden über eine Peakerkennung durch den Kontrolldetektor (9) erfolgt.

26. Verfahren nach Anspruch 24, dadurch gekennzeichnet, daß das Ausblenden über eine Zeitsteuerung erfolgt.

27. Verfahren nach einem der Ansprüche 24 bis 26, dadurch gekennzeichnet, daß ausgeblendete Teile des Chromatogramms gesammelt und gegebenenfalls angereichert werden.

28. Verfahren nach Anspruch 27, dadurch gekennzeichnet, daß die gesammelten und gegebenenfalls angereicherten ausgeblendeten Teile des Chromatogramms durch die Probenaufgabeeinrichtung (5) zugeführt und bis auf gegebenenfalls wiederum ausgeblendete Teile durch die Trennsäule (10) geführt werden.

29. Verfahren nach einem der Ansprüche 23 bis 28, dadurch gekennzeichnet, daß der Trägergasstrom mit der Probe nacheinander durch mehrere Trennsäulen (10, 10') geführt wird, wobei jeweils zwischen zwei Trennsäulen (10, 10') Teile des Chromatogramms über eine Abführleitung unter Verwendung eines geregelten Hilfsgasstroms abgeführt und gegebenenfalls gesammelt werden.

## Claims

1. Gas chromatograph having a carrier gas feed (1, 2) for the pressure-regulated feeding of a carrier gas stream, which feed leads to a sample applicator (5) having preliminary separation which is connected to a branch piece (6) and the latter to a separation column (10), the branch piece (6) additionally having an auxiliary gas inlet (6e) leading to an auxiliary gas feed line (13) for a regulated auxiliary gas stream, a first outlet (6d) leading to a switchable valve arrangement (16, 17), a second outlet (6c) leading to a monitoring detector (9), and a restriction (8), while a detector (11) is optionally connected to the separation column (10), characterised in that, in the branch piece (6), the first outlet (6d) and the second outlet (6c) are arranged on the sample application side with respect to the location of the restriction and the auxiliary gas feed line (13) for the auxiliary gas stream discharges on the separation column side with respect to the location of the restriction.

2. Gas chromatograph according to Claim 1, characterised in that a first control element (12) for adjusting the auxiliary gas stream is provided in the auxiliary gas feed line (13).

3. Gas chromatograph according to Claim 1 or 2, characterised in that a second control element (4) for the carrier gas stream is connected upstream of the sample applicator (5).

4. Gas chromatograph according to Claim 2 or 3, characterised in that the first or second control element (12 and 4 respectively) is a flow controller.

5. Gas chromatograph according to Claim 2 or 3, characterised in that the first or second control element (12 and 4 respectively) is a mass flow regulator.

6. Gas chromatograph according to any one of Claims 1 to 5, characterised in that the auxiliary gas feed line (13) is connected upstream of the branch piece (6) to a pressure gauge (14).

7. Gas chromatograph according to Claim 6, characterised in that the output of the pressure gauge (14) can be used to control the first control element (12) and/or a pressure controller (2) of the carrier gas feed (1, 2).

8. Gas chromatograph according to Claim 6, characterised in that a needle valve is in each case connected as control element (4, 12) upstream of the sample applicator (5) and the auxiliary gas feed line (13), the output of the pressure gauge (14) controlling a pressure controller (2) of the carrier gas feed (1, 2).

9. Gas chromatograph according to any one of Claims 1 to 8, characterised in that the valve arrangement (16, 17) comprises an adjustable needle valve (17).

10. Gas chromatograph according to any one of Claims 1 to 9, characterised in that a trap (15) is connected upstream of the valve arrangement (16, 17).

11. Gas chromatograph according to any one of Claims 1 to 10, characterised in that a plurality of units which can be opened and closed independently of one another by valves and in each case comprise a trap (15 and 15' respectively) and a valve arrangement (16, 17 and 16', 17 respectively) are connected in parallel to the first outlet (6d) of the branch piece (6).

12. Gas chromatograph according to Claim 10 or 11, characterised in that the trap (15, 15') has a collecting tube which is identical to and interchangeable with a vaporiser tube of the sample applicator (5).

13. Gas chromatograph according to any one of Claims 1 to 12, characterised in that the branch piece (6) is heatable to avoid condensation of substances in it.

14. Gas chromatograph according to any one of Claims 1 to 12, characterised in that the branch piece (6) is in thermally conductive connection with the sample applicator (5).

15. Gas chromatograph according to any one of Claims 1 to 14, characterised in that at least one further separation column (10') is provided which is connected via a further branch piece (6') to a preceding separation column (10 or 10'), the further branch piece (6') being designed and connected like the branch piece (6) mentioned, its first outlet (6d) being connected as an auxiliary gas inlet (6e) to one or more valve arrangements (16'', 17''), optionally with further upstream traps (15''), and its auxiliary gas inlet (6e) being connected to a further auxiliary gas feed line (13') for a regulated auxiliary gas stream, while a further monitoring detector (9') is connected to its second auxiliary gas outlet (6c).

16. Gas chromatograph according to any one of Claims 1 to 15, characterised in that an optionally controllable heated auxiliary separation column (25) is connected upstream of the branch piece (6).

17. Branch piece for a gas chromatograph having a through bore (7) which has an inlet (6a) for a carrier gas stream from a sample applicator (5) and an outlet (6b) to be connected to a separation column (10), having an auxiliary gas inlet (6e) for a regulated auxiliary gas stream, a first outlet (6d) to be connected to a switchable valve arrangement (16, 17) and having a second outlet (6c) to be connected to a monitoring detector (9) as well as having a restriction, characterised in that the two outlets (6c, 6d) are arranged on the sample application side with respect to the location of the restriction and are provided on the separation column side with respect to the location of the restriction of the auxiliary gas inlet.

18. Branch piece according to Claim 17, characterised in that the restriction (8) is formed by a constriction of the through bore (7) of the branch piece (6) of small diameter and has a length which is a multiple of the diameter.

19. Branch piece according to Claim 18, characterised in that the diameter of the restriction (8) is of the order of 0.2 mm and the length is a small multiple thereof.

20. Branch piece according to any one of Claims 17 to 19, characterised in that the through bore (7) contains an insert which has the restriction (8).

21. Branch piece according to Claim 20, characterised in that the insert is composed of an inert material, in particular of an Si crystal whose surface has been inactivated with oxygen, or of glass.

22. Branch piece according to any one of Claims 17 to 21, characterised in that it is heatable to avoid condensation of substances in it.

23. Process for separation by gas chromatography switching being carried out between two operating states, in a first operating state a regulated carrier gas stream being passed through a sample applicator (5) and from there to a monitoring detector (9) by blocking access to the capillary separation column (10) by means of a regulated auxiliary gas stream while, in the second operating state, the carrier gas stream is passed on to the separation column (10), characterised in that a gas chromatograph having a branch piece (6) according to any one of Claims 1 to 16 is used, the auxiliary gas stream being fed to the auxiliary gas inlet (6e) of the branch piece (6), with the result that, in the first operating state, only a small part of the carrier gas stream is fed via the second outlet (6c) of the branch piece (6) to the monitoring detector (9) and the major part is fed via the first outlet (6d) of the branch piece (6) to a discharge line opened by a solenoid valve (16) while, in the second operating state, the solenoid valve (16) keeps the discharge line closed and the monitoring detector (9) continues to be supplied with part of the carrier gas stream, the flows at the sample applicator (5) and at the separation column (10) in the first and second operating state being kept constant in terms of flow by virtue of the fact that the flow set at the second outlet of the branch piece (6) is equal to the difference between the auxiliary gas streams in the two states.

24. Process according to Claim 23, characterised in that, in the first operating state, parts of the chromatogram are cut out via the discharge line.

25. Process according to Claim 24, characterised in that the cutting out is effected via a peak detection by the monitoring detector (9).

26. Process according to Claim 24, characterised in that the cutting out is effected via a time control.

27. Process according to any one of Claims 24 to 26, characterised in that parts of the chromatogram which have been cut out are trapped and optionally enriched.

28. Process aaccording to Claim 27, characterised in that the trapped and optionally enriched parts of the chromatogram which have been cut out are fed in through the sample applicator (5) and with the exception of any parts which may have been cut out again are passed through the separation column (10).

29. Process according to any one of Claims 23 to 28, characterised in that the carrier gas stream containing the sample is passed through a plurality of separation columns (10, 10') in succession, parts of the chromatogram being discharged, in each case between two separation columns (10, 10'), via a discharge line using a regulated auxiliary gas stream and are optionally trapped.

## Revendications

1. Chromatographe en phase gazeuse équipé d'une conduite d'entrée de gaz porteur (1,2) raccordée à un dispositif d'échantillonnage (5) avec préfractionnement relié à un élément de répartition (6) lui-même relié à une colonne de fractionnement (10), cet élément de répartition (6) disposant en outre d'une entrée de gaz auxiliaire (13) reliée à une conduite d'entrée de gaz auxiliaire (6e) pour assurer un flux de gaz auxiliaire régulé, ainsi que d'une première sortie (6d) reliée à un dispositif pouvant être commuté par vannes (16,17), d'une deuxième sortie (6c) reliée à un détecteur de contrôle (9) et d'un étranglement (8), un détecteur supplémentaire (11) étant éventuellement relié à la colonne de fractionnement (10), **caractérisé en ce que** le première sortie (6d) et la deuxième sortie (6c) sont disposées du côté échantillonnage de l'étranglement dans l'élément de répartition (6) et la conduite d'entrée de gaz auxiliaire (13) est disposée du côté colonne de fractionnement de l'étranglement.

2. Chromatographe en phase gazeuse selon la revendication 1, caractérisé en ce qu'un premier organe de réglage (12) permettant de régler le flux de gaz auxiliaire est prévu dans la conduite de gaz auxiliaire (13).

3. Chromatographe en phase gazeuse selon l'une quelconque des revendications 1 ou 2, caractérisé en ce qu'un deuxième organe de réglage (4) du flux de gaz porteur est monté en amont du dispositif d'échantillonnage (5).

4. Chromatographe en phase gazeuse selon l'une quelconque des revendications 2 ou 3, caractérisé en ce que le premier ou le deuxième organe de réglage (12 ou 4) est un régulateur de flux.

5. Chromatographe en phase gazeuse selon l'une quelconque des revendications 2 ou 3, caractérisé en ce que le premier ou le deuxième organe de réglage (12 ou 4) est un régulateur d'écoulement volumique.

6. Chromatographe en phase gazeuse selon l'une quelconque des revendications 1 à 5, caractérisé en ce que la conduite de gaz auxiliaire (13) est reliée à un manomètre (14) en amont de l'élément de répartition (6).

7. Chromatographe en phase gazeuse selon la revendication 6, caractérisé en ce que la sortie du manomètre (14) peut être utilisée pour commander le premier organe de réglage (12) et/ou un régulateur de pression (2) de la conduite de gaz porteur (1, 2).

8. Chromatographe en phase gazeuse selon la revendication 6, caractérisé en ce qu'une vanne à pointeau, en tant qu'organe de réglage (4, 12), est montée en amont du dispositif d'échantillonnage (5) et de la conduite de gaz auxiliaire (13), la sortie du manomètre (14) contrôlant un régulateur de pression (2) de la conduite de gaz porteur (1, 2).

9. Chromatographe en phase gazeuse selon l'une quelconque des revendications 1 à 8, caractérisé en ce que le dispositif à vannes (16, 17) comprend une vanne à pointeau réglable (17).

10. Chromatographe en phase gazeuse selon l'une quelconque des revendications 1 à 9, caractérisé en ce qu'un piège (15) est monté en amont du dispositif à vannes (16, 17).

11. Chromatographe en phase gazeuse selon l'une quelconque des revendications 1 à 10, caractérisé en ce que plusieurs unités à ouvrir ou à fermer par des vannes indépendamment les unes des autres, comprenant chacune un piège (15 ou 15') et un dispositif à vannes (16, 17 ou 16', 17') sont raccordées en parallèle à la première sortie (6d) de l'élément de répartition (6).

12. Chromatographe en phase gazeuse selon la revendication 10 ou 11, caractérisé en ce que le piège (15, 15') présente un tube collecteur identique au tube de vaporisation du dispositif d'échantillonnage (5) et, par conséquent, pouvant être échangeable avec ce tube.

13. Chromatographe en phase gazeuse selon l'une quelconque des revendications 1 à 12, caractérisé en ce que l'élément de répartition (6) peut être chauffé pour éviter la condensation de substances à l'intérieur.

14. Chromatographe en phase gazeuse selon l'une quelconque des revendications 1 à 12, caractérisé en ce que l'élément de répartition (6) est relié au dispositif d'échantillonnage (5) de manière à assurer la conduction thermique.

15. Chromatographe en phase gazeuse selon l'une quelconque des revendications 1 à 14, caractérisé en ce qu'au moins une deuxième colonne de fractionnement (10') est reliée à une colonne de fractionnement précédente (10 ou 10') par un deuxième élément de répartition (6') formé et raccordé de manière identique à l'élément de répartition (6) ci-dessus et dont la première sortie (6d) est reliée, comme entrée de gaz auxiliaire (6e), à un ou plusieurs autres dispositifs à vannes (16'',17''), éventuellement avec d'autres pièges (15'') montés en amont et dont l'entrée de gaz auxiliaire (6e) est reliée à une autre conduite de gaz auxiliaire (13') pour assurer un flux régulé de gaz auxiliaire, alors qu'un deuxième détecteur de contrôle (9') est relié à la deuxième sortie (6c) de ce dernier.

16. Chromatographe en phase gazeuse selon l'une quelconque des revendications 1 à 15, caractérisé en ce qu'une colonne de fractionnement auxiliaire (25) pouvant être chauffée et éventuellement contrôlée est montée en amont de l'élément de répartition (6).

17. Elément de répartition pour un chromatographe en phase gazeuse comprenant un alésage de passage (7), disposant d'une entrée de gaz porteur (6a) provenant d'un dispositif d'échantillonnage (5) et une sortie (6b) à relier à une colonne de fractionnement (10), d'une entrée de gaz auxiliaire régulé (6e), d'une première sortie (6d) à relier à un dispositif de commutation à vannes (16, 17) et d'une deuxième sortie (6c) à relier à un détecteur de contrôle (9), ainsi que d'un étranglement (8), caractérisé en ce que les deux sorties (6c, 6d) sont disposées du côté échantillonnage par rapport à l'étranglement et l'entrée de gaz auxiliaire (6e) est disposée du côté colonne de fractionnement par rapport à l'étranglement.

18. Elément de répartition selon la revendication 17, caractérisé en ce que l'étranglement (8) est formé par un rétrécissement de l'alésage de passage (7) de l'élément de répartition (6) dont le diamètre est très faible et dont la longueur est un multiple de son diamètre.

19. Elément de répartition selon la revendication 18, caractérisé en ce que le diamètre de l'étranglement (8) se situe autour de 0,2 mm et que la longueur est un faible multiple de ce diamètre.

20. Elément de répartition selon l'une quelconque des revendications 17 à 19, caractérisé en ce que l'alésage de passage (7) comprend un insert avec l'étranglement (8).

21. Elément de répartition selon la revendication 20, caractérisé en ce que l'insert est fabriqué en un matériau inerte, plus particulièrement en un cristal de Si avec une surface inactivée par l'oxygène ou en verre.

22. Elément de répartition selon l'une quelconque des revendications 17 à 21, caractérisé en ce qu'il est chauffé pour éviter la formation de condensation à l'intérieur.

23. Procédé de fractionnement par chromatographie en phase gazeuse comprenant une commutation entre deux modes de fonctionnement, un flux de gaz porteur régulé passant, dans le premier mode de fonctionnement, par un dispositif d'échantillonnage (5) et ensuite par un détecteur de contrôle (9) à la suite du blocage de l'accès à la colonne de fractionnement capillaire (10) par un flux de gaz auxiliaire régulé, alors que le flux de gaz porteur est transmis à la colonne de fractionnement (10) dans le second mode de fonctionnement, **caractérisé en ce que** ce procédé est appliqué avec un chromatographe en phase gazeuse muni d'un élément de répartition (6) selon l'une quelconque des revendications 1 à 16, le flux de gaz auxiliaire étant introduit à l'entrée de gaz auxiliaire (6e) de l'élément de répartition (6) de manière à introduire, dans le premier mode de fonctionnement, seulement une faible partie du flux de gaz porteur au détecteur de contrôle (9) par la deuxième sortie (6c) de l'élément de répartition (6) et à introduire la plus grande partie par la première sortie (6d) de l'élément de répartition (6), à une conduite d'évacuation ouverte par une électrovanne (16), alors que dans le second mode de fonctionnement, l'électrovanne (16) ferme la conduite de sortie et le détecteur de contrôle (9) continue à être alimenté par une partie du flux de gaz porteur, les flux des premier et second modes de fonctionnement étant maintenus constants au niveau du dispositif d'échantillonnage (5) et de la colonne de fractionnement (10) par le fait que le flux régulé au niveau de la deuxième sortie de l'élément de répartition (6) est égal à la différence entre les flux de gaz auxiliaires mesurés des deux modes.

24. Procédé selon la revendication 23, caractérise en ce que, dans le premier mode de fonctionnement, certaines parties du chromatogramme sont supprimées par la conduite d'évacuation.

25. Procédé selon la revendication 24, caractérisé en ce que la suppression de certaines parties du chromatogramme est effectuée par détection de crêtes à l'aide du détecteur de contrôle (9).

26. Procédé selon la revendication 24, caractérisé en ce que la suppression est effectuée par synchronisation.

27. Procédé selon l'une quelconque des revendications 24 à 26 , caractérisé en ce que des parties supprimées du chromatogramme sont recueillies et éventuellement enrichies.

28. Procédé selon la revendication 27, caractérisé en ce que les parties supprimées du chromatogramme recueillies et éventuellement enrichies sont amenées par le dispositif d'échantillonnage (5) et d'éventuelles parties supprimées lors de cette opération passent par la colonne de fractionnement (10).

29. Procédé selon l'une quelconque des revendications 23 à 28, caractérisé en ce que le flux de gaz porteur passe, avec l'échantillon, successivement par plusieurs colonnes de fractionnement (10, 10') en évacuant et éventuellement recueillant des parties du chromatogramme entre deux colonnes de fractionnement (10, 10') par une conduite d'évacuation et en utilisant un flux de gaz régulé.
